**Europäisches Patentamt**

**European Patent Office**

**Office européen des brevets**

(11) Veröffentlichungsnummer: **0 219 736**
A2

## (12) EUROPÄISCHE PATENTANMELDUNG

(21) Anmeldenummer: **86113575.4**

(22) Anmeldetag: **02.10.86**

(51) Int. Cl.⁴: **H 02 M 3/335**

(30) Priorität: **17.10.85 DE 3537065**

(43) Veröffentlichungstag der Anmeldung:
**29.04.87 Patentblatt 87/18**

(84) Benannte Vertragsstaaten:
**AT CH DE FR GB IT LI NL SE**

(71) Anmelder: **Siemens Aktiengesellschaft Berlin und München**
**Wittelsbacherplatz 2**
**D-8000 München 2(DE)**

(72) Erfinder: **Peruth, Günther, Dipl.-Ing. (FH)**
**Franz-Wolter-Strasse 13**
**D-8000 München 81(DE)**

(54) **Schaltungsanordnung zur Realisierung eines Standby-Betriebs in einem Sperrwandler-Schaltnetzteil.**

(57) In einem Sperrwandler-Schaltnetzteil besitzt der Transformator (Tr) eine fest mit der Primärwicklung (Wp) und lose mit einer der Stromversorgung der Normallast (RL) eines elektrischen Gerätes dienenden Sekundwärwicklung (WI) gekoppelte Wicklung (W3) zur Erzeugung eines Steuersignals für die Standby-Lastversorgung.

Croydon Printing Company Ltd.

EP 0 219 736 A2

0219736

Siemens Aktiengesellschaft
Berlin und München

Unser Zeichen
VPA 85 P 1 7 8 9 E

Schaltungsanordnung zur Realisierung eines Standby-Betriebs in einem Sperrwandler-Schaltnetzteil.

Die vorliegende Erfindung betrifft eine Schaltungsanordnung zur Realisierung eines Standby-Betriebs in einem Sperrwandler-Schaltnetzteil.

Für Geräte der Unterhaltungselektronik wird ein Arbeits- und ein Ruhebetrieb gefordert, dessen Umschaltung ohne einen mechanischen Netz-Ein- und Ausschalter möglich sein soll. Der Ruhebetrieb wird auch als Standby-Betrieb bezeichnet. Für diesen Standby-Betrieb werden minimale Verlustleistung, hohe Wirtschaftlichkeit, unhörbarer Betrieb sowie Schaltbarkeit durch Fernbedienung gefordert.

In modernen, mit einem Sperrwandler ausgerüsteten Geräten wurden die vorgenannten Bedingungen bisher entweder mit einem eigenen Standby-Betrieb-Netzteil und einer Abschaltung des Sperrwandlers durch ein Relais auf der Primärseite des Netzteil-Transformators oder mittels eines freischwingenden Sperrwandlers gelöst, wobei die Normallast im Arbeitsbetrieb durch ein Relais abgeschaltet wurde und eine Regelschaltung für den Betrieb mit einer Minimallast im Standby-Betrieb vorgesehen war. Dabei stiegen jedoch die unbelasteten Spannungen auf der Sekundärseite an, so daß bei einem Störfall auf der Primärseite Zerstörungen hervorgerufen werden konnten.

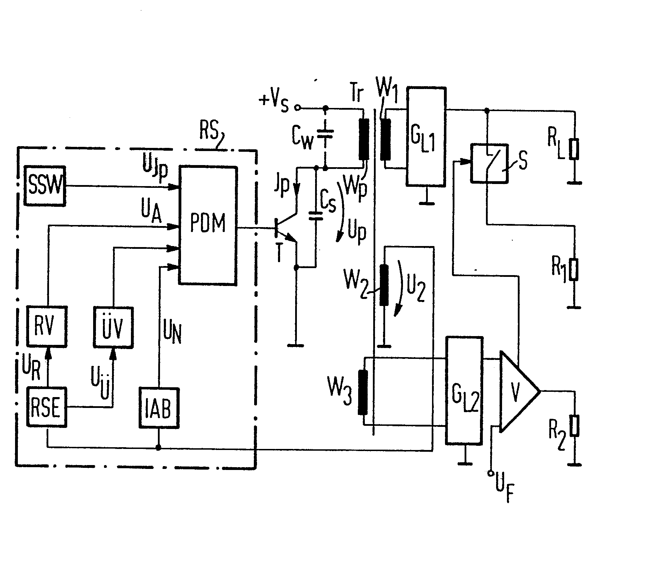

Anhand der einzigen Figur der Zeichnung wird im folgenden zunächst prinzipiell der Aufbau eines Sperrwandler-Schaltnetzteils beschrieben, das beispielsweise aus der DE-OS 33 12 209 bekannt ist.

Lz 1 EM /07.10.1985

0219736

85 P 1 7 8 9 E

Im Sperrwandler-Schaltnetzteil gemäß der Figur der Zeichnung ist ein als Stellglied dienender Leistungstransistor T mit seiner Emitter-Kollektor-Strecke in Serie zu einer Primärwicklung Wp eines Transformators Tr geschaltet. Eine diese Serienschaltung betreibende Gleichspannung +Vs wird durch Gleichrichtung der Netzwechselspannung gewonnen. Im Falle eines npn-Transistors als Schalter T liegt der Emitter an Bezugspotential, der Kollektor an der Primärwicklung Wp des Transformators Tr und das andere Ende der Primärwicklung Wp an der Spannung +Vs. Die Emitter-Kollektor-Strecke des Transistors T ist von einem Kondensator Cs überbrückt, wobei weiterhin über der Primärwicklung Wp eine parasitäre Kapazität Cw liegt. Der Transistor T wird an seiner Basis von einer noch zu erläuternden Regelschaltung RS angesteuert.

Eine erste Sekundärwicklung Wl des Transformators Tr bildet die eigentliche Sekundärseite des Schaltnetzteil-Transformators Tr, welche über einen Gleichrichter GL1 ein schematisch durch seine Last RL angedeutetes elektrisches Gerät speist.

Eine zweite Sekundärwicklung W2 des Transformators Tr dient als Sensor für die Regelschaltung RS und liegt mit einem Ende an Bezugspotential und mit dem anderen Ende am Eingang der Regelschaltung RS.

Die Regelschaltung RS enthält ein den Transistor T steuerndes und als Pulsdauer-Modulator ausgebildetes Ausgangsschaltungsteil PDM sowie zwei durch die Sensorwicklung W2 gesteuerte Eingangsschaltungsteile, wobei ein Eingangsschaltungsteil RSE zur Erzeugung einer Regelspannung UR dient und über einen Regelverstärker RV ein Steuersignal UA für den Pulsdauer-Modulator PDM liefert. Ein weiteres Eingangsschaltungsteil IAB dient zur Impulsaufbereitung und liefert ein Signal UN für den Pulsdauer-Modulator PDM der Regelschaltung RS. Es ist weiterhin ein Strom-Spannungswandler SSW vorgesehen, der die Istwertsteuerung der Regelschaltung bildet und eine dem mit Jp bezeichneten Primärstrom proportionale Spannung UJp für den Pulsdauer-Modulator PDM liefert.

Bei Entlastung eines Sperrwandler-Schaltnetzteils der vorstehend prinzipiell beschriebenen Art steigt die Frequenz des den Schalttransistor T ansteuernden impulsförmigen Signals an. Bei Leerlauf strebt die Frequenz theoretisch dem Wert Unendlich zu. Praktisch wird sie jedoch auf die Eigenfrequenz und die minimale Pulsbreite, die durch das Verhalten des Schalttransistors T und des Pulsbreiten-Modulators PDM bestimmt werden, begrenzt. Damit wird auch die minimal mögliche Leistungsabgabe festgelegt. Die Standby-Last muß größer als die Minimallast sein, um eine definierte Regelspannung UR zu erzeugen, mit der die Realisierung eines konstanten Arbeitspunktes des Regelverstärkers RV möglich ist. Durch ein nicht eigens dargestelltes Koppelglied zwischen der Impulsaufbereitungsstufe IAB und des Regelspannungsgenerators RSE kann die Regelspannung UR im Rhythmus der durch die Standby-Last bedingten Frequenzfolge kurzzeitig so geändert werden, daß ein stabiler Frequenzbetrieb möglich wird. Für einen exakten Betrieb muß der Transformator Tr bestimmte Qualitätsforderungen erfüllen.

Jedes moderne Sperrwandler-Schaltnetzteil ist so ausgelegt, daß es nicht nur im Normalbetrieb, sondern auch - mit entsprechenden Schutzschaltungen - in einem Überlast- bzw. Kurzschlußbetrieb betreibbar ist. Bei bisher bekannten Möglichkeiten der Realisierung eines Standby-Betriebes ergeben sich jedoch aufgrund des Lastverhaltens auf der Sekundärseite sehr hohe Frequenzen von beispielsweise 70 KHz für den Standby-Betrieb. Derartige hohe Frequenzen führen jedoch zu Verlustleistungen im Transformator, sowie zu weiteren Verlustleistungsbeiträgen durch Umladung von Kapazitäten.

Der vorliegenden Erfindung liegt daher die Aufgabe zugrunde, eine Schaltungsanordnung der in Rede stehenden Art anzugeben, mit der ein Standby-Betrieb bei kleineren Frequenzen möglich ist.

Diese Aufgabe wird bei einer Schaltungsanordnung der eingangs genannten Art erfindungsgemäß durch die Merkmale des kennzeichnenden Teils des Patentanspruchs 1 gelöst.

Weiterbildungen des Erfindungsgedankens sind Gegenstand von Unteransprüchen.

Die Erfindung wird im folgenden anhand einer Ausführungsform gemäß weiterer Schaltungsteile der bereits diskutierten einzigen Figur der Zeichnung näher erläutert.

Erfindungsgemäß besitzt der Transformator Tr eine weitere Wicklung W3, die fest mit der Primärwicklung Wp und lose mit der ersten Sekundärwicklung W1 gekoppelt ist und zur Erzeugung eines Steuersignals für die Standby-Lastversorgung dient. Diese weitere Wicklung W3 speist einen weiteren Gleichrichter GL2, der seinerseits wiederum eine Vergleichsstufe V ansteuert. Die vorgenannte feste Kopplung der weiteren Wicklung W3 mit der Primärwicklung Wp sowie die lose Kopplung dieser weiteren Wicklung W3 mit der Sekundärwicklung W1 sind so beschaffen, daß der Gleichrichter GL1 und die Vergleichsstufe V bei jedem Betriebszustand ausreichend versorgt werden.

Für den Standby-Betrieb wird die Vergleichsstufe V beispielsweise aus einer Fernbedienung mit einer Referenz UF versorgt, so daß bei Vorhandensein dieser Referenz eine schematisch durch einen Widerstand repräsentierte Standby-Last R2 versorgt wird.

Weiterhin wird dann durch die Vergleichsstufe V ein Schalter S angesteuert, durch den ein Teilkurzschluß derart herbeigeführt wird, daß die Versorgung der Normallast RL abgeschaltet und eine weitere, ebenfalls schematisch durch einen Widerstand dargestellte Standby-Last Rl versorgt wird. Durch die Verkopplungen der Wicklungen Wl und W2 wird eine an der Wicklung W2 stehende Spannung U2, welche die Stufen RSE und IAB in der Regelschaltung RS ansteuert, so klein, daß der Regelverstärker RV gesperrt wird, wobei jedoch ein in Weiterbildung der Erfindung in der Regelschaltung RS vorgesehener Überlastverstärker ÜV durch eine von der Regelspannungserzeugungs-Stufe RSE erzeugte Spannung UÜ angesteuert wird. Der Pulsdauer-Modulator wird durch die Stufen RSE und IAB dann so gesteuert, daß sich ein Betrieb bei niedrigen Frequenzen, beispielsweise bei 17 KHz mit einem Tastverhältnis von kleiner 1:10, vorzugsweise etwa 1:100 ergibt. Damit ist eine minimale Leistungsaufnahme aus dem Netz gewährleistet.

4 Patentansprüche
1 Figur

## Patentansprüche

1. Schaltungsanordnung zur Realisierung eines Standby-betriebs in einem Sperrwandler-Schaltnetzteil mit einem Transformator (Tr), dessen Primärwicklung (Wp) in Reihe zu einem elektronischen Schalter (T) liegt und der eine der Stromversorgung der Normallast (RL) eines elektrischen Gerätes dienende erste Sekundärwicklung (W1) sowie eine eine Regelschaltung (RS) ansteuernde zweite Sekundärwicklung (W2) besitzt, wobei die Regelschaltung (RS) den elektronischen Schalter (T) ansteuert,
g e k e n n z e i c h n e t   d u r c h
eine weitere fest mit der Primärwicklung (Wp) und lose mit der ersten Sekundärwicklung (W1) gekoppelte Transformator-Wicklung (W3) zur Erzeugung eines Steuersignals für die Standby-Lastversorgung.

2. Schaltungsanordnung nach Anspruch 1,
g e k e n n z e i c h n e t   d u r c h
eine an die weitere Transformator-Wicklung (W3) und eine Referenz (UF) angekoppelte Vergleichsstufe (V), von der eine Standby-Last (R2) versorgt wird.

3. Schaltungsanordnung nach Anspruch 1 und 2,
d a d u r c h   g e k e n n z e i c h n e t,
daß durch die Vergleichsstufe (V) ein Schalter (S) gesteuert ist, der zur Abkopplung der Normallast (RL) von der ersten Sekundärwicklung (W1) sowie zur Versorgung einer weiteren Standby-Last (R1) dient.

4. Schaltungsanordnung nach Anspruch 3,
g e k e n n z e i c h n e t   d u r c h
einen Überlastverstärker (ÜV) in der Regelschaltung (RS), der bei Abkopplung der Normallast (RS) über einen Regelspannungserzeuger (RSE) angesteuert wird und seinerseits

**0219736**

einen den elektronischen Schalter (T) ansteuernden Pulsdauer-Modulator (PDM) im Sinne der Erzeugung eines impulsförmigen Steuersignals mit einem Tastverhältnis kleiner 1:10, vorzugsweise etwa 1:100 und einer Frequenz oberhalb der Hörgrenze steuert.

0219736